# EUROPEAN PATENT SPECIFICATION

(11) **EP 2 828 967 B1**
(45) Date of publication and mention of the grant of the patent: **12.10.2016**
(21) Application number: 13719593.9
(22) Date of filing: 20.03.2013
(51) Int. Cl.: H02M 7/49, H02M 7/797, H02M 7/757

(54) **POWER ELECTRONIC CONVERTER**
ELEKTRONISCHER LEISTUNGSWANDLER
CONVERTISSEUR ÉLECTRONIQUE DE PUISSANCE

(30) Priority: 22.03.2012 WO PCT/EP2012/055137
(43) Date of publication of application: 28.01.2015
(73) Proprietor: General Electric Technology GmbH, 5400 Baden (CH)
(72) Inventor: TRAINER, David Reginald, Alvaston, Derby DE24 0AQ (GB); OKAEME, Nnamdi, Woodside Park, London N12 7FB (GB)
(74) Representative: Potter Clarkson LLP
(86) International application number: PCT/GB2013/050725
(87) International publication number: WO 2013/140168

(56) References cited:
- WO-A1-2011/160678
- US-A- 4 998 054
- US-A1- 2012 063 185
- MARQUARDT R: "Modular Multilevel Converter: An universal concept for HVDC-Networks and extended DC-Bus-applications", 2010 INTERNATIONAL POWER ELECTRONICS CONFERENCE : IPEC-SAPPORO 2010 - [ECCE ASIA] ; SAPPORO, JAPAN, IEEE, PISCATAWAY, NJ, USA, 21 June 2010 (2010-06-21), pages 502-507, XP031729731, ISBN: 978-1-4244-5394-8

## Description

This invention relates to a power electronic converter.

In power transmission networks alternating current (AC) power is typically converted to direct current (DC) power for transmission via overhead lines and/or undersea cables. This conversion removes the need to compensate for the AC capacitive load effects imposed by the transmission line or cable, and thereby reduces the cost per kilometer of the lines and/or cables. Conversion from AC to DC thus becomes cost-effective when power needs to be transmitted over a long distance.

The conversion of AC to DC power is also utilized in power transmission networks were it is necessary to interconnect AC networks operating at different frequencies. In any such power transmission network, converters are required at each interface between AC and DC power to effect the required conversion, and one such form of converter is a voltage source converter (VSC).

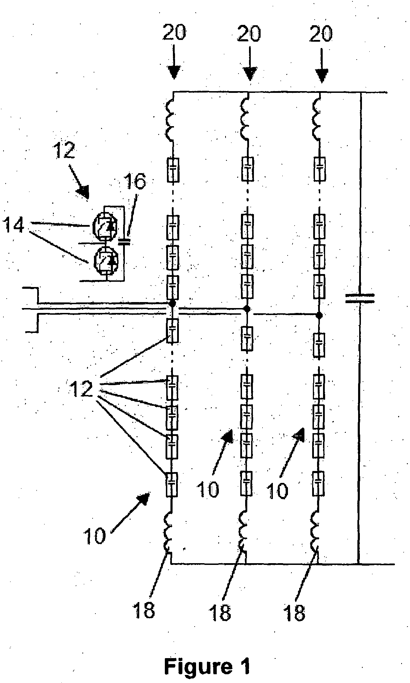

A known voltage source converter is shown in Figure 1 and includes a multilevel converter arrangement. The multilevel converter arrangement includes respective converter bridges 10 of series-connected converter cells 12. Each converter cell 12 includes a pair of series-connected insulated gate bipolar transistors (IGBTs) 14 connected in parallel with a capacitor 16. The individual converter cells 12 are not switched simultaneously and the converter voltage steps are comparatively small, and so such an arrangement eliminates the problems associated with the direct switching of the series-connected IGBTs 14.

The capacitor 16 of each converter cell 12 is configured to have a sufficiently high capacitive value in order to constrain the voltage variation at the capacitor terminals in such a multilevel converter arrangement. A DC side reactor 18 is also required in each converter bridge 10 to limit transient current flow between converter limbs 20, and thereby enable the parallel connection and operation of the converter limbs 20.

According to an aspect of the invention, there is provided a power electronic converter, for connecting AC and DC networks and transferring power therebetween, comprising:
first and second DC terminals defining a DC link for connection to a DC network; wherein, in use, the DC link has a reversible DC link voltage applied thereacross;
at least one converter limb extending between the first and second DC terminals and having first and second limb portions separated by an AC terminal for connection to an AC network, each limb portion including a plurality of rationalised modules, each rationalised module having first and second sets of series-connected current flow control elements connected in parallel with at least one energy storage device, each set of current flow control elements being connected in parallel with at least one energy storage device, each set of current flow control elements including a primary active switching element to selectively direct current through the energy storage device and a primary passive current check element to limit current flow through the rationalised module to a single direction, the current flow control elements and the or each energy storage device combining to selectively provide a voltage source to synthesise an AC voltage at the AC terminal; and
a first controller to selectively switch each rationalised module in each limb portion to control the configuration of the AC voltage at the corresponding AC terminal so as to transfer power from the AC network to the DC network in an AC to DC power transfer mode and to transfer power from the DC network to the AC network in a DC to AC power transfer mode,
characterised in that each limb portion includes one or more secondary passive current check elements to limit current flow through the corresponding limb portion to a single direction between the corresponding AC and DC terminals, the or each secondary passive current check element being connected in series with the respective plurality of rationalised modules,
wherein the or each secondary passive current check element is configured to support part of a differential voltage appearing across the corresponding limb portion and each plurality of rationalised modules is configured to support the other part of the differential voltage appearing across the corresponding limb portion in one of the AC to DC and DC to AC power transfer modes, and
wherein each plurality of rationalised modules is configured to support a differential voltage appearing across the corresponding limb portion when the or each corresponding secondary passive current check element is forced into conduction by a reversal of polarity of the DC link voltage across the DC link in the other of the AC to DC and DC to AC power transfer modes.

During operation of the power electronic converter to transfer power between the AC and DC networks, the flow of current in the power electronic converter alternates between the limb portions over a duty cycle. As such, when one of the limb portions is configured to conduct current between the AC terminal and corresponding DC terminal (i.e. is in a conducting state), the other of the limb portions is configured to be switched out of circuit (i.e. is in a non-conducting state).

The limb portion in the non-conducting state experiences a differential voltage thereacross, the differential voltage being the difference between the voltages at the AC terminal and corresponding DC terminal. The differential voltage experienced by the limb portion in the non-conducting state may be shared between the or each secondary passive current check element and each rationalised module. In other words, the or each secondary passive current check element may support part of a differential voltage appearing across the corresponding limb portion when that limb portion is in a non-conducting state. This means that the plurality of rationalised modules in each limb portion may be not required to be capable of blocking the entire differential voltage, since the or each secondary passive current check element can be used to block part of the differential voltage, thus permitting a reduction in voltage rating of the plurality of rationalised modules in each limb portion.

In contrast, during operation of the known voltage source converter shown in Figure 1, the series-connected converter cells 12 are required to be capable of blocking the entire differential voltage experienced by the corresponding converter bridge 10, thus requiring the series-connected converter cells to have a relatively higher combined voltage rating for a given set of AC and DC voltages of the AC and DC networks.

The series connection of the or each secondary passive current check element and each rationalised module in each limb portion can therefore reduce considerably the required number of rationalised modules in each limb portion required to carry out transfer of power between the AC and DC networks.

The arrangement of the power electronic converter according to the invention results in a small, lightweight, inexpensive, efficient and reliable means of connecting AC and DC networks and transferring power therebetween.

It will be understood that the AC to DC power transfer mode relates to voltage rectification and the DC to AC power transfer mode relates to voltage inversion.

The power electronic converter is operated in either of the AC to DC and DC to AC power transfer modes without having to modify the structure of each rationalised module in each limb portion to permit current flow in the opposite direction. In particular, the power electronic converter is operated to transfer power from the AC network to the DC network by applying a first polarity of the DC link voltage across the DC link and to transfer power from the DC network to the AC network by applying a second polarity of the DC link voltage across the DC link, whereby the first polarity is opposite to the second polarity. In other words, the power electronic converter is operated in either of the AC to DC and DC to AC power transfer modes by reversing the DC link voltage across the DC link.

The series-connection of the or each secondary passive current check element and each rationalised module in each limb portion means that the secondary passive current check elements dictate which limb portion is in conduction and thereby is in use to synthesise the AC voltage at the or each AC terminal.

The inclusion of the or each secondary passive current check element in each limb portion restricts the limb portion current to a single direction and is thus compatible with the unidirectional nature of each rationalised module. This means that each limb portion does not require a secondary active switching element connected in series with each rationalised module to dictate which limb portion is in conduction. This results in a more cost-efficient and reliable power electronic converter, since passive current check elements (e.g. diodes) are lighter, smaller, and simpler than active switching elements.

However, the unidirectional nature of the or each secondary passive current check element means that the or each secondary passive current check element in each limb portion can only block a reverse voltage and thus cannot block a forward voltage. This in turn means that, whilst the or each secondary passive current check element in a limb portion in a non-conducting state is capable of blocking part of the differential voltage in one of the AC to DC and DC to AC power transfer modes, reversal of the polarity of the DC link voltage across the DC link will render the or each secondary passive current check element incapable of blocking part of the differential voltage in the other of the AC to DC and DC to AC power transfer modes.

Consequently, in order to enable the power electronic converter to operate in both the AC to DC and DC to AC power transfer modes, the voltage rating of the plurality of rationalized modules in each limb portion must be increased to be capable of supporting the entire differential voltage experienced by the limb portion in the non-conducting state when the or each secondary passive current check element is rendered incapable of blocking part of the differential voltage.

Alternatively, for both the AC to DC and DC to AC power transfer modes, the direction of the or each secondary passive current check element in each limb portion may be rearranged to match the power transfer mode in order to enable the or each secondary passive current check element to block part of the differential voltage when the corresponding limb portion is in the non-conducting state. This however adds cost and structural complexity to the power electronic converter.

On the other hand one or more secondary active switching elements in each limb portion may be configured to be capable of blocking both forward and reverse voltages. This means that the plurality of rationalised modules in each limb portion would be required to block only part of the differential voltage for both the AC to DC and DC to AC power transfer modes, thus obviating the need to increase the voltage rating of the rationalised module or the plurality of rationalised modules in each limb portion to be capable of supporting the entire differential voltage experienced by that limb portion in the non-conducting state in both the AC to DC and DC to AC power transfer modes.

Preferably the first and second sets of current flow control elements are connected in parallel with the respective energy storage device in a full-bridge arrangement to form a 2-quadrant bipolar rationalised module that can provide negative, zero or positive voltage while conducting current in a single direction.

Each rationalised module in each limb portion may be configured to set the power transferable in one of the AC to DC and DC to AC power transfer modes to be equal to the power transferable in the other of the AC to DC and DC to AC power transfer modes. In other words, each rationalised module in each limb portion may be configured to enable the first controller to switch each rationalised module in each limb portion to create a symmetrical transfer of power between the AC and DC networks, in which the power electronic converter provides full power transfer functionality in both directions.

Each rationalised module in each limb portion may be configured so that the plurality of rationalised modules in each limb portion is rated to be capable of providing a maximum voltage thereacross to limit the power transferable in the DC to AC power transfer mode to be less than the power transferable in the AC to DC power transfer mode. In other words, each rationalised module in each limb portion may be configured to enable the first controller to switch each rationalised module in each limb portion to create an asymmetrical transfer of power between the AC and DC networks, in which the power electronic converter provides full power transfer functionality in one direction and is able to provide power transfer in the other direction at a reduced level.

Preferably each rationalised module in each limb portion is configured so that the plurality of rationalised modules in each limb portion is rated to be capable of providing a maximum voltage thereacross to limit the power transferable in the DC to AC power transfer mode to be in the range of 10% to 15% of the power transferable in the AC to DC power transfer mode.

A power electronic converter with an asymmetrical power transfer functionality is perfectly acceptable in certain power transfer applications with asymmetrical power transfer requirements. For example, the power electronic converter with an asymmetrical power transfer functionality may be used in power transfer applications where there is a heavy bias towards the export of power to a DC network and a minimal need to import power, such as arises in renewable wind and tidal power generation where the required power transfer is predominantly from the source to a distribution grid. The minimal need to import power may relate to infrequent transmission of power at a reduced level in the opposite direction for the purpose of starting up or operating hardware of wind and tidal farms before the hardware transitions to a power generation operating mode once availability of the prime mover (such as wind and tidal waves) is sufficient to generate the required amount of power.

The configuration of each rationalised module in each limb portion to create a power electronic converter with an asymmetrical power transfer functionality results in a more optimal power electronic converter for power transfer applications with asymmetrical power transfer requirements, in terms of losses, efficiency, size, weight and cost.

The controller may control the switching of the current flow control elements in each rationalised module in each limb portion to construct, at the or each AC terminal, an AC voltage with a peak value which is 27% higher than a DC voltage at the corresponding DC terminal. The construction of such an AC voltage at the or each AC terminal means that the product of the voltage provided by the plurality of rationalised modules in each limb portion and the current flowing through the plurality of rationalised modules in each limb portion gives a net zero energy exchange in the plurality of rationalised modules in each limb portion over half of a duty cycle. In addition, the structure of the rationalised module permits the unidirectional current flowing through the rationalised module to flow in either forward or reverse directions through the or each energy storage device. This in turn allows selective real-time charging and discharging, and thereby control of the voltage level, of the or each energy storage device in each rationalised module whilst the power electronic converter is operated to transfer power between the AC and DC networks.

Preferred embodiments of the invention will now be described, by way of non-limiting examples only, with reference to the accompanying drawings in which:
Figure 1 shows, in schematic form, a prior art power electronic converter;
Figure 2 shows, in schematic form, a power electronic converter according to a first embodiment of the invention;
Figure 3 shows, in schematic form, the structure of a rationalised module forming part of the power electronic converter of Figure 2;
Figure 4a shows, in schematic form, the operation of a converter limb of the power electronic converter of Figure 2 in an AC to DC power transfer mode;
Figure 4b shows, in schematic form, the operation of a converter limb of the power electronic converter of Figure 2 in a DC to AC power transfer mode; and
Figure 5 shows, in schematic form, a power electronic converter according to a second embodiment of the invention.

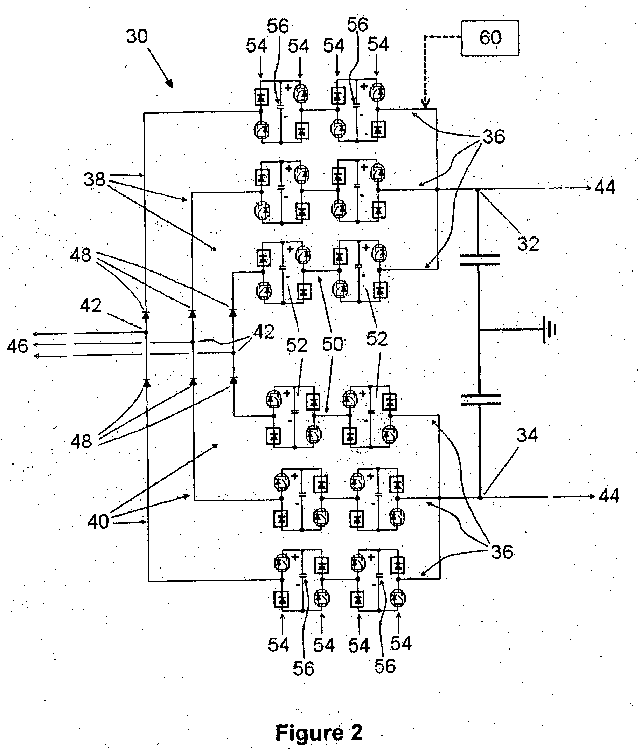

A first power electronic converter 30 according to a first embodiment of the invention is shown in Figure 2.

The first power electronic converter 30 includes first and second DC terminals 32,34 and a plurality of converter limbs 36. The first and second DC terminals 32,34 define a DC link. Each converter limb 36 extends between the first and second DC terminals 32,34 and has first and second limb portions 38,40 separated by an AC terminal 42.

In use, the first and second DC terminals 32,34 of the first power electronic converter 30 are respectively connected to first and second terminals of a DC network 44, a reversible DC link voltage being applied across the first and second terminals, and the AC terminal 42 of each converter limb 36 is connected to a respective phase of a multi-phase AC network 46. In this manner, in use, the DC link has a reversible DC link voltage applied there across.

Each of the first and second limb portions 38,40 includes a secondary passive current check element 48 connected in series with a chain-link converter 50.

Each secondary passive current check element 48 is in the form of a diode. The secondary passive current check element 48 in the first limb portion 38 is arranged so that current flowing in the first limb portion 38 can only flow from the AC terminal 42 to the first DC terminal 32. The secondary passive current check element 48 in the second limb portion 40 is arranged so that current flowing in the second limb portion 40 can only flow from the second DC terminal 34 to the AC terminal 42.

It is envisaged that, in other embodiments of the invention, the secondary passive current check element 48 may be replaced by a plurality of series-connected secondary passive current check elements.

Each chain-link converter 50 includes a plurality of series-connected rationalised modules 52.

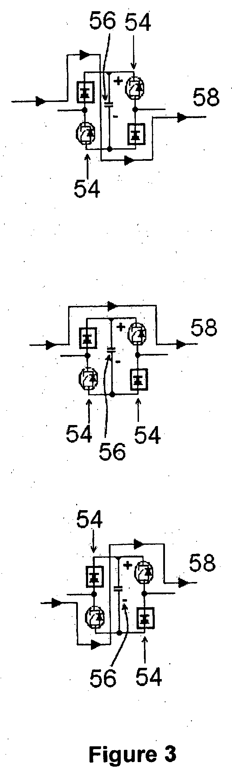

Figure 3 shows, in schematic form, the structure of each rationalised module 52.

Each rationalised module 52 has first and second sets of series-connected current flow control elements 54 and an energy storage device in the form of a capacitor 56. The first and second sets of series-connected current flow control elements 54 are connected in parallel with the capacitor 56 in a full-bridge arrangement. Each set of current flow control elements 54 includes a primary active switching element connected in series with a primary passive current check element.

Each primary active switching element is constituted by a semiconductor device in the form of an Insulated Gate Bipolar Transistor (IGBT) which is connected in parallel with an anti-parallel diode. It is envisaged that each primary active switching element may be replaced by a different active switching element. For example, in other embodiments of the invention, each IGBT may be replaced by a gate turn-off thyristor, a field effect transistor, an injection-enhanced gate transistor, an integrated gate commutated thyristor or any other self-commutated semiconductor device.

Each primary passive current check element is in the form of a diode.

The capacitor 56 of each rationalised module 52 is selectively bypassed or inserted into the corresponding chain-link converter 50 by changing the states of the current flow control elements 54. This selectively directs current 58 through the capacitor 56 or causes current 58 to bypass the capacitor 56, so that the rationalised module 52 provides a negative, zero or positive voltage.

The capacitor 56 of the rationalised module 52 is bypassed when the current flow control elements 54 in the rationalised module 52 are configured to form a short circuit in the rationalised module 52. This causes current 58 in the corresponding chain-link converter 50 to pass through the short circuit and bypass the capacitor 56, and so the rationalised module 52 provides a zero voltage, i.e. the rationalised module 52 is configured in a bypassed mode.

The capacitor 56 of the rationalised module 52 is inserted into the corresponding chain-link converter 50 when the current flow control elements 54 in the rationalised module 52 are configured to allow the current 58 in the corresponding chain-link converter 50 to flow into and out of the capacitor 56. The capacitor 56 then charges or discharges its stored energy so as to provide a non-zero voltage, i.e. the rationalized module 52 is configured in a non-bypassed mode. The full-bridge arrangement of the rationalised module 52 permits configuration of the current flow control elements 54 in the rationalised module 52 to cause current 58 to flow into and out of the capacitor 56 in either direction, and so the rationalised module 52 can be configured to provide a negative or positive voltage in the non-bypassed mode.

Meanwhile the series connection of the primary passive current check element and primary active switching element of each set of current flow control elements 54 in the rationalised module 52 limits the flow of current 58 through the rationalised module 52 to a single direction. As such each rationalised module 52 is arranged such that current flowing in the first limb portion 38 can only flow from the AC terminal 42 to the first DC terminal 32, and current flowing in the second limb portion 40 can only flow from the second DC terminal 34 to the AC terminal 42.

In this manner the first and second sets of series-connected current flow control elements 54 are connected in parallel with the capacitor 56 in a full-bridge arrangement to define a 2-quadrant bipolar rationalised module that can provide zero, positive or negative voltage while conducting current in a single direction.

It is possible to build up a combined voltage across each chain-link converter 50, which is higher than the voltage available from each of its individual rationalised modules 52, via the insertion of the capacitors 56 of multiple rationalised modules 52, each providing its own voltage, into each chain-link converter 50. In this manner switching of the current flow control elements 54 in each rationalised module 52 causes each chain-link converter 50 to provide a stepped variable voltage source, which permits the generation of a voltage waveform across each chain-link converter 50 using a step-wise approximation.

It is envisaged that, in other embodiments of the invention, the capacitor 56 in each rationalised module 52 may be replaced by another type of energy storage device which is capable of storing and releasing energy, e.g. a battery or a fuel cell.

The first power electronic converter 30 further includes a first controller 60 to selectively switch each rationalised module 52 (i.e. control the switching of the current flow control elements 54 of each rationalised module 52) in each limb portion 38,40 to control the configuration of the AC voltage at the corresponding AC terminal 42.

For the purposes of this specification, the operation of the first power electronic converter 30 is described with reference to one of its converter limbs 36. It will be appreciated that the described operation of one of the converter limbs 36 of the first power electronic converter 30 applies mutatis mutandis to the operation of the other two converter limbs 36.

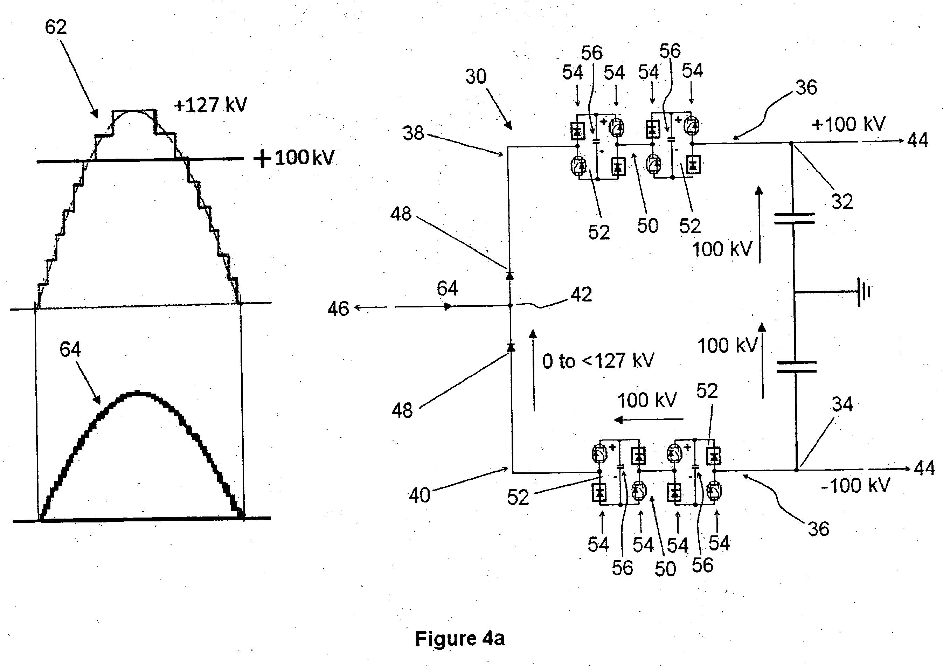

In use, the first power electronic converter 30 is operable to transfer power from the AC network 46 to the DC network 44 in an AC to DC power transfer mode. As shown in Figure 4a, the first terminal of the DC network 44 carries a DC voltage of +100 kV and the second terminal of the DC network 44 carries a DC voltage of -100kV, and the AC voltage of the AC network 46 varies between -127 kV and + 127 kV.

The chain-link converter 50 in each limb portion 38,40 is rated to be capable of providing a maximum voltage of 227 kV thereacross.

This enables the chain-link converter 50 in the first limb portion 38 to provide the necessary variable voltage to synthesise the AC voltage at the AC terminal 42 in a voltage range extending between 0 kV to 127 kV, and enables the chain-link converter 50 in the second limb portion 40 to provide the necessary variable voltage to synthesise the AC voltage at the AC terminal 42 in a voltage range extending between 0 kV to -127 kV.

The secondary passive current check elements 48 in the first and second limb portions 38,40 dictate which limb portion is in conduction and thereby is in use to synthesise the AC voltage at the AC terminal 42. The configuration of the AC voltage at the AC terminal 42 is controlled by combining first and second AC voltage components 62 as follows.

To construct the first AC voltage component 62, the first limb portion 38 is in a conducting state by way of its secondary passive current check element 48 being forward-biased, and the first controller 60 controls the switching of the current flow control elements 54 of each rationalised module 52 in the first limb portion 38 to add and subtract voltage steps to, i.e. "push up" and "pull down", the voltage of +100kV at the first DC terminal 32. The first AC voltage component 62 is constructed to be in the form of a positive, half-sinusoidal voltage waveform with a peak value of +127 kV while a positive AC current 64 flows into the AC terminal 42.

Meanwhile the second limb portion 40 is in a non-conducting state by way of its secondary passive current check element 48 being reverse-biased, and thus experiences a differential voltage thereacross, the differential voltage being the difference between the voltages at the AC terminal 42 and second DC terminal 34. Thus, the differential voltage experienced by the second limb portion 40 in the non-conducting state varies between 100 kV and 227 kV, and is shared between the secondary passive current check element 48, which is rated to block a voltage ranging from 0 to 127 kV, and the chain-link converter 50, which is configured to block a voltage of 100 kV.

To construct the second AC voltage component, the second limb portion 40 is in a conducting state by way of its secondary passive current check element 48 being forward-biased, and the first controller 60 controls the switching of the current flow control elements 54 of each rationalised module 52 in the second limb portion 40 to add and subtract voltage steps to, i.e. "push up" and "pull down", the voltage of -100kV at the second DC terminal 34. The second AC voltage component is constructed to be in the form of a negative, half-sinusoidal voltage waveform with a peak value of -127 kV while a negative AC current flows into the AC terminal 42.

Meanwhile the first limb portion 38 is in a non-conducting state by way of its secondary passive current check element 48 being reverse-biased, and thus experiences a differential voltage thereacross, the differential voltage being the difference between the voltages at the AC terminal 42 and first DC terminal 32. Thus, the differential voltage experienced by the first limb portion 38 in the non-conducting state varies between 100 kV and 227 kV, and is shared between the secondary passive current check element 48, which is rated to block a voltage ranging from 0 to 127 kV, and the chain-link converter 50, which is configured to block a voltage of 100 kV.

The combination of the first and second AC voltage components 62 over a duty cycle results in the synthesis, at the AC terminal 42, of a sinusoidal AC voltage with peak values of +127 kV and -127 kV. In this manner the first power electronic converter 30 controls the configuration of an AC voltage at the AC terminal 42 to transfer power from the AC network 46 to the DC network 44 in an AC to DC power transfer mode.

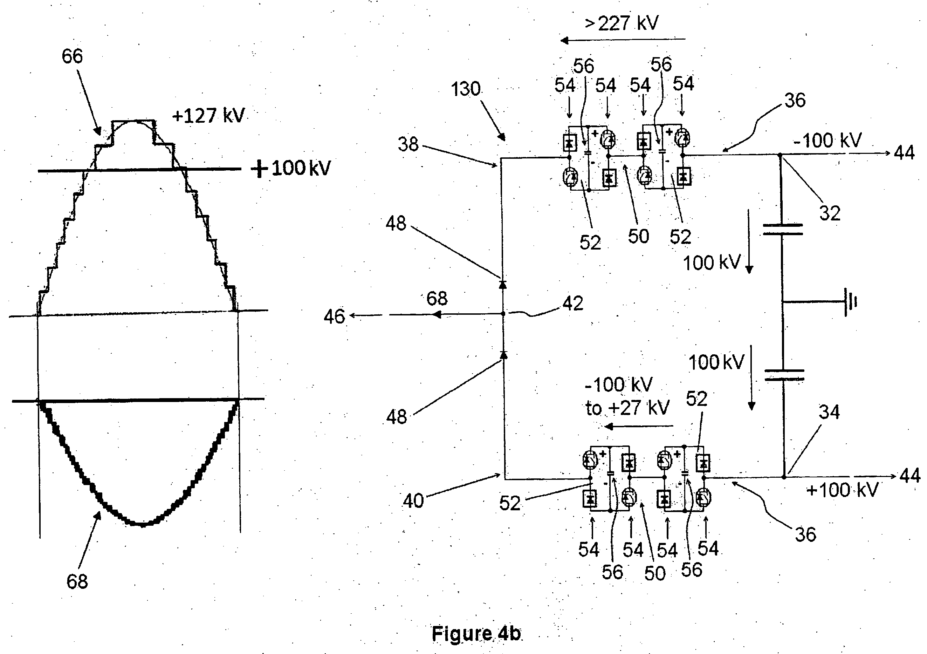

In use, the first power electronic converter 30 is operable to transfer power from the DC network 44 to the AC network 46 in a DC to AC power transfer mode. As shown in Figure 4b, in the DC to AC power transfer mode, the polarity of the DC link voltage across the DC link is reversed. In particular, in the DC to AC power transfer mode, the first terminal of the DC network 44 carries a DC voltage of -100 kV and the second terminal of the DC network 44 carries a DC voltage of +100kV. Meanwhile the AC voltage of the AC network 46 varies between -127 kV and + 127 kV.

In the DC to AC power transfer mode, the configuration of the AC voltage at the AC terminal 42 is controlled by combining first and second AC voltage components 66 as follows.

To construct the first AC voltage component 66, the second limb portion 40 is in a conducting state, and the first controller 60 controls the switching of the current flow control elements 54 of each rationalised module 52 in the second limb portion 40 to add and subtract voltage steps to, i.e. "push up" and "pull down", the voltage of +100kV at the second DC terminal 34. The first AC voltage component 66 is constructed to be in the form of a positive, half-sinusoidal voltage waveform with a peak value of +127 kV while a negative AC current 68 flows out of the AC terminal 42.

Meanwhile the first limb portion 38 is in a non-conducting state, and thus experiences a differential voltage thereacross, the differential voltage being the difference between the voltages at the AC terminal 42 and first DC terminal 32. Thus, the differential voltage experienced by the first limb portion 38 in the non-conducting state varies between 100 kV and 227 kV, and is supported entirely by the chain-link converter 50 which is configured to block a voltage varying between 100 kV and 227 kV. The secondary passive current check element 48 in the first limb portion 38 is forced into conduction by the reversal of the polarity of the DC link voltage across the DC link, and so is rendered incapable of blocking part of the differential voltage.

To construct the second AC voltage component, the first limb portion 38 is in a conducting state, and the first controller 60 controls the switching of the current flow control elements 54 of each rationalised module 52 in the first limb portion 38 to add and subtract voltage steps to, i.e. "push up" and "pull down", the voltage of -100kV at the first DC terminal 32. The second AC voltage component is constructed to be in the form of a negative, half-sinusoidal voltage waveform with a peak value of -127 kV while a positive AC current flows out of the AC terminal 42.

Meanwhile the second limb portion 40 is in a non-conducting state, and thus experiences a differential voltage thereacross, the differential voltage being the difference between the voltages at the AC terminal 42 and second DC terminal 34. Thus, the differential voltage experienced by the second limb portion 40 in the non-conducting state varies between 100 kV and 227 kV, and is supported entirely by the chain-link converter 50 which is configured to block a voltage varying between 100 kV and 227 kV. The secondary passive current check element 48 in the second limb portion 40 is forced into conduction by the reversal of the polarity of the DC link voltage across the DC link, and so is rendered incapable of blocking part of the differential voltage.

The combination of the first and second AC voltage components 66 over a duty cycle results in the synthesis, at the AC terminal 42, of a sinusoidal AC voltage with peak values of +127 kV and -127 kV. In this manner the first power electronic converter 30 controls the configuration of an AC voltage at the AC terminal 42 to transfer power from the DC network 44 to the AC network 46 in the DC to AC power transfer mode.

The increase in rating of each chain-link converter 50 to enable it to provide a voltage of 227 kV thereacross enables each chain-link converter 50 to support the entire differential voltage experienced by the corresponding limb portion 38,40 in the non-conducting state in the DC to AC power transfer mode. In contrast, a voltage rating of 100 kV across each chain-link converter 50, whilst being sufficient to synthesise the corresponding AC voltage component 66 at the AC terminal 42, is insufficient to support the entire differential voltage experienced by the corresponding limb portion 38,40 in the non-conducting state in the DC to AC power transfer mode.

The arrangement of each chain-link converter 50 in the manner set out above therefore creates a power electronic converter 30 with a symmetrical power transfer functionality, in which the power electronic converter 30 provides full power transfer functionality in both the AC to DC and the DC to AC power transfer modes.

The construction, at the AC terminal 42, of the AC voltage with peak values which are 27% higher than the respective DC voltages at the first and second DC terminals 32,34 means that the product of the voltage provided by each chain-link converter 50 and the current flowing through each chain-link converter 50 gives a net zero energy exchange in each chain-link converter 50 over half of a duty cycle. In addition, the structure of the rationalised module 52 permits the unidirectional current flowing through the rationalised module 52 to flow in either forward or reverse directions through the capacitor 56. This in turn allows selective real-time charging and discharging, and thereby control of the voltage level, of the capacitor 56 in each rationalised module 52 whilst the power electronic converter is operated to transfer power from the AC network 46 to the DC network 44.

The series-connection of the secondary passive current check element 48 and chain-link converter 50 in each limb portion 38,40 means that each limb portion 38,40 does not require an active switching element connected in series with the chain-link converter 50 to dictate which limb portion is in conduction. This results in a more cost-efficient and reliable power electronic converter, since passive current check elements are lighter, smaller, and simpler than active switching elements.

The arrangement of the first power electronic converter 30 results in a small, lightweight, inexpensive, efficient and reliable means of connecting the AC and DC networks 46,44 and transferring power from the AC network 46 to the DC network 44.

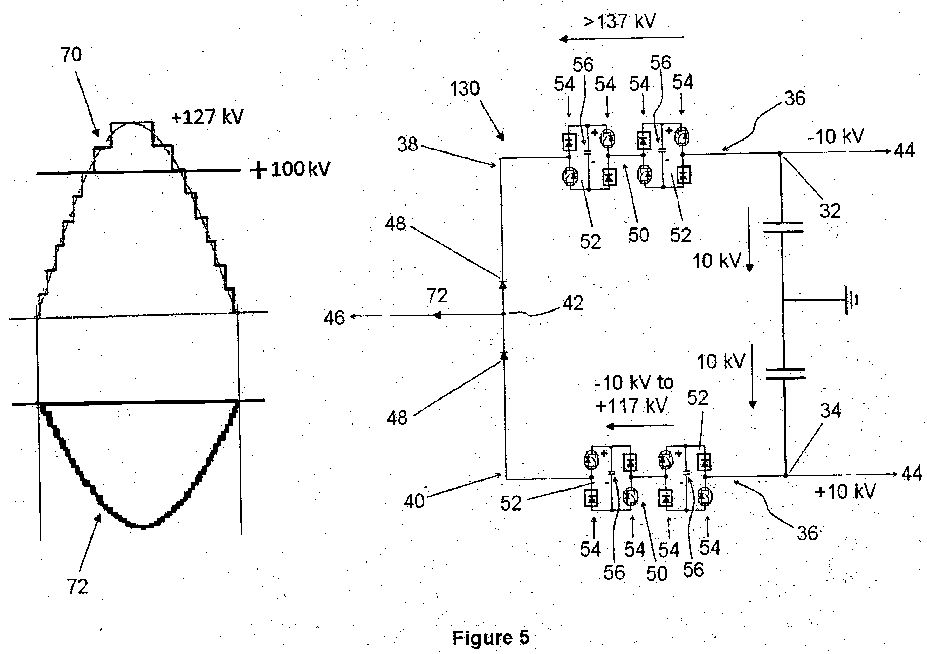

A second power electronic converter 130 according to a second embodiment of the invention is shown in Figure 5. The structure and operation of the second power electronic converter 130 of Figure 5 is similar to the structure and operation of the first power electronic converter 30 of Figure 2, and like features share the same reference numerals.

The second power electronic converter 130 differs from the first power electronic converter 30 in that, in the second power electronic converter 130, the chain-link converter 50 in each limb portion 38,40 is rated to be capable of providing a maximum voltage of 137 kV thereacross, instead of a maximum voltage of 227 kV thereacross.

In use, the second power electronic converter 130 is operable to transfer power from the AC network 46 to the DC network 44 in an AC to DC power transfer mode. The operation of the second power electronic converter 130 in the AC to DC power transfer mode is the same as the earlier-described operation of the first power electronic converter 30 in the AC to DC power transfer mode.

In use, the second power electronic converter 130 is operable to transfer power from the DC network 44 to the AC network 46 in a DC to AC power transfer mode. In the DC to AC power transfer mode, the polarity of the DC link voltage across the DC link is reversed. In particular, in the DC to AC power transfer mode, the first terminal of the DC network 44 carries a DC voltage of -10 kV and the second terminal of the DC network 44 carries a DC voltage of +10kV. Meanwhile the AC voltage of the AC network 46 varies between -127 kV any + 127 kV.

In the DC to AC power transfer mode, the configuration of the AC voltage at the AC terminal 42 is controlled by combining first and second AC voltage components 70 as follows.

To construct the first AC voltage component 70, the second limb portion 40 is in a conducting state, and the first controller 60 controls the switching of the current flow control elements 54 of each rationalised module 52 in the second limb portion 40 to add and subtract voltage steps to, i.e. "push up" and "pull down", the voltage of +10kV at the second DC terminal 34. The first AC voltage component 70 is constructed to be in the form of a positive, half-sinusoidal voltage waveform with a peak value of +127 kV while a negative AC current 72 flows out of the AC terminal 42.

Meanwhile the first limb portion 38 is in a non-conducting state, and thus experiences a differential voltage thereacross, the differential voltage being the difference between the voltages at the AC terminal 42 and first DC terminal 32. Thus, the differential voltage experienced by the first limb portion 38 in the non-conducting state varies between 10 kV and 137 kV, and is supported entirely by the chain-link converter 50 which is configured to block a voltage varying between 10 kV and 137 kV. The secondary passive current check element 48 in the first limb portion 38 is forced into conduction by the reversal of the polarity of the DC link voltage across the DC link, and so is rendered incapable of blocking part of the differential voltage.

To construct the second AC voltage component, the first limb portion 38 is in a conducting state, and the first controller 60 controls the switching of the current flow control elements 54 of each rationalised module 52 in the first limb portion 38 to add and subtract voltage steps to, i.e. "push up" and "pull down", the voltage of -10kV at the first DC terminal 32. The second AC voltage component is constructed to be in the form of a negative, half-sinusoidal voltage waveform with a peak value of -127 kV while a positive AC current flows out of the AC terminal 42.

Meanwhile the second limb portion 40 is in a non-conducting state, and thus experiences a differential voltage thereacross, the differential voltage being the difference between the voltages at the AC terminal 42 and second DC terminal 34. Thus, the differential voltage experienced by the second limb portion 40 in the non-conducting state varies between 10 kV and 137 kV, and is supported entirely by the chain-lihk converter 50 which is configured to block a voltage varying between 10 kV and 137 kV. The secondary passive current check element 48 in the second limb portion 40 is forced into conduction by the reversal of the polarity of the DC link voltage across the DC link, and so is rendered incapable of blocking part of the differential voltage.

The combination of the first and second AC voltage components 70 over a duty cycle results in the synthesis, at the AC terminal 42, of a sinusoidal AC voltage with peak values of +127 kV and -127 kV. In this manner the second power electronic converter 130 controls the configuration of an AC voltage at the AC terminal 42 to transfer power from the DC network 44 to the AC network 46 in the DC to AC power transfer mode.

The increase in rating of each chain-link converter 50 to enable it to provide a maximum voltage of 137 kV thereacross, instead of a maximum voltage of 227 kV thereacross, enables each chain-link converter 50 to support the entire differential voltage experienced by the corresponding limb portion in the non-conducting state in the DC to AC power transfer mode whilst limiting the power transferable in the DC to AC power transfer mode to be 10% of the power transferable in the AC to DC power transfer mode.

It is envisaged that, in other embodiments of the invention, the chain-link converter 50 in each limb portion 38,40 may be rated to be capable of providing a different voltage thereacross to limit the power transferable in the DC to AC power transfer mode to be a different percentage of the power transferable in the AC to DC power transfer mode.

The configuration of each chain-link converter 50 in the manner set out above therefore creates a power electronic converter 130 with an asymmetrical power transfer functionality, in which the power electronic converter 130 provides full power transfer functionality in the AC to DC power transfer mode and is able to provide power transfer in the DC to AC power transfer mode at a reduced level.

A power electronic converter 130 with an asymmetrical power transfer functionality is perfectly acceptable in certain power transfer applications with asymmetrical power transfer requirements. For example, the second power electronic converter 130 may be used in power transfer applications where there is a heavy bias towards the export of power to the DC network 44 and a minimal need to import power, such as arises in renewable wind and tidal power generation where the required power transfer is predominantly from the source to a distribution grid. The minimal need to import power may relate to infrequent transmission of power at a reduced level in the opposite direction for the purpose of starting up or operating hardware of wind and tidal farms before the hardware transitions to a power generation mode of operation once availability of the prime mover (wind or waves) is sufficient to generate the required amount of power.

The configuration of each chain-link converter 50 in the manner set out above to create a second power electronic converter 130 with an asymmetrical power transfer functionality results in a more optimal power electronic converter for power transfer applications with asymmetrical power transfer requirements, in terms of losses, efficiency, size, weight and cost.

Furthermore, the series-connection of the secondary passive current check element 48 and chain-link converter 50 in each limb portion 38,40 obviates the need for each chain-link converter 50 to be capable of blocking the entire differential voltage in the AC to DC power transfer mode, thus permitting a reduction in voltage rating of each chain-link converter 50. This therefore reduces considerably the required number of rationalised modules 52 in each chain-link converter 50 required to carry out transfer of power between the AC and DC networks 46,44.

It is envisaged that the secondary passive current check element 48 in each limb portion 38,40 may be replaced by one or more secondary active switching elements that is connected in series with each rationalised module.

In use, the or each secondary active switching element is switchable to dictate which limb portion is in conduction and thereby is in use to synthesise the AC voltage at the AC terminal. The or each secondary active switching element in each limb portion may be configured to be capable of blocking both forward and reverse voltages. This means that the chain-link converter in each limb portion would be required to block only part of the differential voltage for both the AC to DC and DC to AC power transfer modes, thus obviating the need to increase the voltage rating of the chain-link converter in each limb portion to be capable of supporting the entire differential voltage experienced by that limb portion in the non-conducting state in both the AC to DC and DC to AC power transfer modes.

It is also envisaged that, in other embodiments of the invention, the power electronic converter may include a different number of converter limbs, wherein the AC terminal of each converter limb is connectable to a respective phase of a multi-phase AC network.

It is further envisaged that, in other embodiments of the invention, the power electronic converter may include a single converter limb, wherein the AC terminal is connectable to a single-phase AC network.

It will be appreciated that the voltage values used in the embodiments shown are merely chosen to illustrate the operation of the respective embodiment of the power electronic converter, and thus may vary in practice depending on the power requirements of the associated power application.

## Claims

1. A power electronic converter (30,130), for connecting AC and DC networks (46,44) and transferring power therebetween, comprising:
first and second DC terminals (32,34) defining a DC link for connection to a DC network (44); wherein, in use, the DC link has a reversible DC link voltage applied thereacross;
at least one converter limb (36) extending between the first and second DC terminals (32,34) and having first and second limb portions (38,40) separated by an AC terminal (42) for connection to an AC network (46), each limb portion (38,40) including a plurality of rationalised modules (52), each rationalised module (52) having first and second sets of series-connected current flow control elements (54) connected in parallel with at least one energy storage device (56), each set of current flow control elements (54) connected in parallel with at least one energy storage device (56), each set of current flow control elements (54) including a primary active switching element to selectively direct current through the energy storage device (56) and a primary passive current check element to limit current flow through the rationalised module (52) to a single direction, the current flow control elements (54) and the or each energy storage device (56) combining to selectively provide a voltage source to synthesise an AC voltage at the AC terminal (42); and
a first controller (60) to selectively switch each rationalised module (52) in each limb portion (38,40) to control the configuration of the AC voltage at the corresponding AC terminal (42) so as to transfer power from the AC network (46) to the DC network (44) in an AC to DC power transfer mode and to transfer power from the DC network (44) to the AC network (46) in a DC to AC power transfer mode,
**characterised in that** each limb portion (38,40) includes one or more secondary passive current check elements (48) to limit current flow through the corresponding limb portion (38,40) to a single direction between the corresponding AC and DC terminals (42,32,34), the or each secondary passive current check element (48) being connected in series with the respective plurality of rationalised modules (52),
wherein the or each secondary passive current check element (48) is configured to support part of a differential voltage appearing across the corresponding limb portion (38,40) and each plurality of rationalised modules (52) is configured to support the other part of the differential voltage appearing across the corresponding limb portion (38,40) in one of the AC to DC and DC to AC power transfer modes, and
wherein each plurality of rationalised modules (52) is configured to support a differential voltage appearing across the corresponding limb portion (38,40) when the or each corresponding secondary passive current check element (48) is forced into conduction by a reversal of polarity of the DC link voltage across the DC link in the other of the AC to DC and DC to AC power transfer modes.

2. A power electronic converter (30,130) according to Claim 1 wherein the first and second sets of series-connected current flow control elements (54) are connected in parallel with the respective energy storage device (56) in a full-bridge arrangement to form a 2-quadrant bipolar rationalised module (52) that can provide zero, positive or negative voltage while conducting current in a single direction.

3. A power electronic converter (30,130) according to any preceding claim wherein each rationalised module (52) in each limb portion (38,40) is configured so that the plurality of rationalised modules (52) in each limb portion (38,40) is rated to be capable of providing a maximum voltage thereacross to limit the power transferable in the DC to AC power transfer mode to be less than the power transferable in the AC to DC power transfer mode.

4. A power electronic converter (30,130) according to any preceding claim wherein each rationalised module (52) in each limb portion (38,40) is configured so that the plurality of rationalised modules (52) in each limb portion (38,40) is rated to be capable of providing a maximum voltage thereacross to limit the power transferable in the DC to AC power transfer mode to be in the range of 10% to 15% of the power transferable in the AC to DC power transfer mode.

## Patentansprüche

1. Elektronischer Leistungswandler (30, 130) zum Verbinden eines Wechselstrom- und eines Gleichstromnetzes (46, 44) und zum Übertragen von Leistung zwischen ihnen, Folgendes umfassend:
eine erste und eine zweite Gleichstromklemme (32, 34), die eine Gleichstromverbindung für den Anschluss an ein Gleichstromnetz (44) definieren; wobei im Gebrauch eine umkehrbare Gleichstromanschlusspannung an der Gleichstromverbindung anliegt;
wenigstens einen Wandlerschenkel (36), der sich zwischen der ersten und der zweiten Gleichstromklemme (32, 34) erstreckt und einen ersten und einen zweiten Schenkelabschnitt (38, 40) aufweist, getrennt durch eine Wechselstromklemme (42) zum Verbinden mit einem Wechselstromnetz (46), wobei jeder Schenkelabschnitt (38, 40) eine Mehrzahl von rationalisierten Modulen (52) enthält, wobei jedes rationalisierte Modul (52) einen ersten und einen zweiten Satz aus in Reihe geschalteten Stromflusssteuerelementen (54), die mit wenigstens einer Energiespeichervorrichtung (56) parallel geschaltet sind, aufweist, wobei jeder Satz aus Stromflusssteuerelementen (54) mit wenigstens einer Energiespeichervorrichtung (56) parallel geschaltet ist, wobei jeder Satz aus Stromflusssteuerelementen (54) ein primäres aktives Schaltelement aufweist, um selektiv Strom durch die Energiespeichervorrichtung (56) zu leiten, und ein primäres passives Stromprüfelement, um Stromfluss durch die rationalisierten Module (52) auf eine einzige Richtung zu beschränken, wobei die Stromflusssteuerelemente (54) und die oder jede Energiespeichervorrichtung (56) kombiniert werden, um selektiv eine Spannungsquelle bereitzustellen, um eine Wechselstromspannung an der Wechselstromklemme (42) zu synthetisieren; und
eine erste Steuervorrichtung (60), um jedes rationalisierte Modul (52) in jedem Schenkelabschnitt (38, 40) selektiv zu schalten, um die Konfiguration der Wechselstromspannung an der entsprechenden Wechselstromklemme (42) zu steuern, um so in einem Wechselstrom-zu-Gleichstrom-Leistungsübertragungsmodus Leistung von dem Wechselstromnetz (46) an das Gleichstromnetz (44) zu übertragen und in einem Gleichstrom-zu-Wechselstrom-Leistungsübertragungsmodus Leistung von dem Gleichstromnetz (44) an das Wechselstromnetz (46) zu übertragen,
**dadurch gekennzeichnet, dass** jeder Schenkelabschnitt (38, 40) ein oder mehrere sekundäre passive Stromprüfelemente (48) umfasst, um Stromfluss durch den entsprechenden Schenkelabschnitt (38, 40) auf eine einzige Richtung zwischen den entsprechenden Wechselstrom- und Gleichstromklemmen (42, 32, 34) zu beschränken, wobei das oder jedes sekundäre passive Stromprüfelement (48) mit der entsprechenden Mehrzahl von rationalisierten Modulen (52) in Reihe geschaltet ist,
wobei das oder jedes sekundäre passive Stromprüfelement (48) dafür ausgelegt ist, einen Teil einer Differentialspannung entlang des entsprechenden Schenkelabschnitts (38, 40) zu unterstützen, und jede Mehrzahl von rationalisierten Modulen (52) dafür ausgelegt ist, den anderen Teil der Differentialspannung zu unterstützen, die in einem des Wechselstrom-zu-Gleichstrom- beziehungsweise Gleichstrom-zu-Wechselstrom-Leistungübertragungsmodus entlang des entsprechenden Schenkelabschnitts (38, 40) auftritt, und
wobei jede Mehrzahl von rationalisierten Modulen (52) dafür ausgelegt ist, eine Differenzialspannung zu unterstützen, die entlang des entsprechenden Schenkelabschnitts (38, 40) auftritt, wenn das oder jedes entsprechende sekundäre passive Stromprüfelement (48) durch eine Umkehr der Polarität der Gleichstromanschlussspannung an der Gleichstromverbindung zu einem Leiten in dem anderen des Wechselstrom-zu-Gleichstrombeziehungsweise des Gleichstrom-zu-Wechselstrom-Leistungsübertragungsmodus gezwungen wird.

2. Elektronischer Leistungswandler (30, 130) nach Anspruch 1, wobei der erste und der zweite Satz aus in Reihe geschalteten Stromflusssteuerelementen (54) in einer vollständigen Brückenanordnung mit der jeweiligen Energiespeichervorrichtung (56) parallel geschaltet sind, um ein rationalisiertes zweipoliges 2-Quadranten-Modul (52) auszubilden, das Nullspannung, positive Spannung oder negative Spannung bereitstellen kann, während Strom in eine einzige Richtung geleitet wird.

3. Elektronischer Leistungswandler (30, 130) nach einem der vorhergehenden Ansprüche, wobei jedes rationalisierte Modul (52) in jedem Schenkelabschnitt (38, 40) dafür ausgelegt ist, dass die Mehrzahl von rationalisierten Modulen (52) in jedem Schenkelabschnitt (38, 40) derart bemessen ist, dass sie in der Lage ist, eine maximale Spannung dazwischen bereitzustellen, um die in dem Gleichstrom-zu-Wechselstrom-Leistungsübertragungsmodus übertragbare Leistung so zu begrenzen, dass sie geringer ist als die in dem Wechselstrom-zu-Gleichstrom-Übertragungsmodus übertragbare Leistung.

4. Elektronischer Leistungswandler (30, 130) nach einem der vorhergehenden Ansprüche, wobei jedes rationalisierte Modul (52) in jedem Schenkelabschnitt (38, 40) dafür ausgelegt ist, dass die Mehrzahl von rationalisierten Modulen (52) in jedem Schenkelabschnitt (38, 40) derart bemessen ist, dass sie in der Lage ist, eine maximale Spannung dazwischen bereitzustellen, um die in dem Gleichstrom-zu-Wechselstrom-Leistungsübertragungsmodus übertragbare Leistung so zu begrenzen, dass sie im Bereich von 10 % bis 15 % der in dem Wechselstrom-zu-Gleichstrom-Leistungsübertragungsmodus übertragbaren Leistung liegt.

## Revendications

1. Convertisseur électronique de puissance (30, 130) pour raccorder des réseaux en courant alternatif et en courant continu (46, 44) et transférer la puissance entre eux, comprenant:
des première et seconde bornes en courant continu (32, 34) définissant une liaison en courant continu pour un raccordement à un réseau en courant continu (44) ; dans lequel, en utilisation, la liaison en courant continu a une tension de liaison en courant continu réversible appliquée aux bornes de celle-ci ;
au moins une branche de convertisseur (36) s'étendant entre les première et seconde bornes en courant continu (32, 34) et ayant des première et seconde parties de branche (38, 40) séparées par une borne en courant alternatif (42) pour un raccordement à un réseau en courant alternatif (46), chaque partie de branche (38, 40) comportant une pluralité de modules rationalisés (52), chaque module rationalisé (52) ayant des premier et second ensembles d'éléments de commande de circulation de courant raccordés en série (54) raccordés en parallèle avec au moins un dispositif de stockage d'énergie (56), chaque ensemble d'éléments de commande de circulation de courant (54) étant raccordé en parallèle avec au moins un dispositif de stockage d'énergie (56), chaque ensemble d'éléments de commande de circulation de courant (54) comportant un élément de commutation actif primaire pour diriger sélectivement le courant continu à travers le dispositif de stockage d'énergie (56) et un élément de vérification de courant passif primaire pour limiter une circulation de courant à travers le module rationalisé (52) à une seule direction, les éléments de commande de circulation de courant (54) et le ou chaque dispositif de stockage d'énergie (56) se combinant pour fournir sélectivement une source de tension pour synthétiser une tension alternative au niveau de la borne en courant alternatif (42) ; et
une première unité de commande (60) pour commuter sélectivement chaque module rationalisé (52) dans chaque partie de branche (38, 40) pour commander la configuration de la tension alternative au niveau de la borne en courant alternatif correspondante (42) de façon à transférer la puissance du réseau en courant alternatif (46) au réseau en courant continu (44) dans un mode de transfert de puissance courant alternatif à courant continu et à transférer la puissance du réseau en courant continu (44) au réseau en courant alternatif (46) dans un mode de transfert de puissance courant continu à courant alternatif,
**caractérisé en ce que** chaque partie de branche (38, 40) comporte un ou plusieurs éléments de vérification de courant passif secondaire (48) pour limiter une circulation de courant à travers la partie de branche (38, 40) correspondante à une seule direction entre les bornes en courant alternatif et en courant continu (42, 32, 34) correspondantes, l'élément ou chaque élément de vérification de courant passif secondaire (48) étant raccordé en série à la pluralité respective de modules rationalisés (52),
dans lequel l'élément ou chaque élément de vérification de courant passif secondaire (48) est configuré pour supporter une partie d'une tension différentielle apparaissant aux bornes de la partie de branche (38, 40) correspondante et chaque pluralité de modules rationalisés (52) est configurée pour supporter l'autre partie de la tension différentielle apparaissant aux bornes de la partie de branche (38, 40) correspondante dans l'un des modes de transfert de puissance courant alternatif à courant continu et courant continu à courant alternatif, et
dans lequel chaque pluralité de modules rationalisés (52) est configurée pour supporter une tension différentielle apparaissant aux bornes de la partie de branche (38, 40) correspondante lorsque l'élément ou chaque élément de vérification de courant passif secondaire (48) correspondant est amené de force en conduction par une inversion de polarité de la tension de liaison en courant continu aux bornes de la liaison en courant continu dans l'autre des modes de transfert de puissance courant alternatif à courant continu et courant continu à courant alternatif.

2. Convertisseur électronique de puissance (30, 130) selon la revendication 1, dans lequel les premier et second ensembles d'éléments de commande de circulation de courant raccordés en série (54) sont raccordés en parallèle avec le dispositif de stockage d'énergie (56) respectif dans un agencement de pont complet pour former un module rationalisé bipolaire à 2 quadrants (52) qui peut fournir une tension nulle, positive ou négative tout en conduisant le courant dans une seule direction.

3. Convertisseur électronique de puissance (30, 130) selon l'une quelconque des revendications précédentes, dans lequel chaque module rationalisé (52) dans chaque partie de branche (38, 40) est configuré de sorte que la pluralité de modules rationalisés (52) dans chaque partie de branche (38, 40) soit nominale pour être capable de fournir une tension maximale aux bornes de celle-ci pour limiter la puissance transférable dans le mode de transfert de puissance courant continu à courant alternatif pour qu'elle soit inférieure à la puissance transférable dans le mode de transfert de puissance courant alternatif à courant continu.

4. Convertisseur électronique de puissance (30, 130) selon l'une quelconque des revendications précédentes, dans lequel chaque module rationalisé (52) dans chaque partie de branche (38, 40) est configuré de sorte que la pluralité de modules rationalisés (52) dans chaque partie de branche (38, 40) soit nominale pour être capable de fournir une tension maximale aux bornes de celle-ci pour limiter la puissance transférable dans le mode de transfert de puissance courant continu à courant alternatif pour qu'elle soit dans la plage de 10 % à 15 % de la puissance transférable dans le mode de transfert de puissance courant alternatif à courant continu.
